# EUROPEAN PATENT SPECIFICATION

(11) **EP 1 939 397 B1**
(45) Date of publication and mention of the grant of the patent: **11.04.2012**
(21) Application number: 07122493.5
(22) Date of filing: 06.12.2007
(51) Int. Cl.: F01D 5/14, F01D 11/00, F01D 9/04, F01D 5/08

(54) **Turbine nozzle with bullnose step-down platform**
Statorbeschaufelung mit abgerundeter Abwärtsstufe in der Plattform
Aubage statorique ayant un dénivelé abaissé arrondi de plateforme

(30) Priority: 19.12.2006 US 642002
(43) Date of publication of application: 02.07.2008
(73) Proprietor: GENERAL ELECTRIC COMPANY, Schenectady, NY 12345 (US)
(72) Inventor: Klasing, Kevin Samuel, Springboro, OH 45066 (US); Lee, Ching-Pang, Cincinnati, OH 45243 (US); Hunter, Scott David, Fairfield, OH 45014 (US)
(74) Representative: Williams, Andrew Richard

(56) References cited:
- GB-A- 2 032 531
- GB-A- 2 427 004
- US-A- 5 181 728
- US-A- 5 252 026
- US-B2- 6 572 335

## Description

The present invention relates generally to gas turbine engines, and, more specifically, to turbine efficiency therein.

In a gas turbine engine, air is pressurized in a compressor and mixed with fuel in a combustor for generating hot combustion gases. Energy is extracted from the combustion gases in turbine stages which power the compressor through one drive shaft, and produce additional work for powering an upstream fan in a turbofan aircraft engine application, or driving an external drive shaft for marine and industrial (M&I) applications.

The basic core engine typically includes a multistage axial compressor having rows of compressor blades and corresponding guide vanes which pressurize ambient air in stages and correspondingly increase the temperature thereof. The air discharged from the aft end of the compressor has the highest pressure, commonly referred to as compressor discharge pressure (CDP), and a correspondingly high temperature.

In an exemplary configuration, the compressor may have seven stages for increasing air pressure many times atmospheric pressure along with many hundreds of degrees of temperature increase due to the compression cycle. A fewer or greater number of compression stages may be used as desired for the specific design of the gas turbine engine and its intended use.

A majority of the CDP air discharged from the compressor is mixed with fuel in the combustor for generating hot combustion gases. These combustion gases then undergo an expansion cycle in the several turbine stages for extracting energy therefrom which correspondingly reduces the pressure of the combustion gases and the temperature thereof. A high pressure turbine (HPT) immediately follows the combustor and is used to power the compressor blades in the core engine.

A low pressure turbine (LPT) follows the HPT and drives the second shaft for powering the upstream fan in the turbofan engine application, or driving an external drive shaft for M&I applications.

The overall efficiency of the gas turbine engine is dependent on the efficiency of air compression, efficiency of combustion, and efficiency of combustion gas expansion in the turbine stages.

Each turbine stage typically includes an upstream turbine nozzle or stator having a row of nozzle vanes which direct the combustion gases downstream through a corresponding row of turbine rotor blades. The blades are typically mounted to the perimeter of a supporting rotor disk in corresponding dovetail slots formed therein.

The turbine blades and vanes are typically hollow airfoils with corresponding internal cooling channels therein which receive compressor discharge air for cooling thereof during operation. The hollow blades and vanes typically include various rows of film cooling and other discharge holes through the pressure and suction sidewalls thereof for discharging the spent internal cooling air in corresponding external films for further protecting the airfoils.

The main turbine flowpath is designed to confine the combustion gases as they flow through the engine and decrease in temperature and pressure from the combustor. The various cooling circuits for the turbine components are independent from the main flowpath and must be provided with cooling air at sufficient pressure to prevent ingestion of the hot combustion gases therein during operation.

For example, suitable rotary seals are provided between the stationary turbine nozzles and the rotating turbine blades to prevent ingestion or backflow of the hot combustion gases into the cooling circuits.

Since the airfoils of the nozzle vanes and turbine blades typically include rows of cooling air outlet holes, the cooling air must also have sufficient pressure greater than that of the external combustion gases to provide a suitable backflow margin to prevent ingestion of the hot combustion gases into the turbine airfoils themselves.

Since the combustion gases and cooling air are channeled through corresponding flowpaths or flow circuits in the engine, they are subject to various aerodynamic losses which further decrease engine efficiency. Fluid flow is subject to friction or drag losses, flow separation losses, and mixing losses all of which reduce pressure and decrease efficiency.

The rotary seal between the first stage turbine nozzle and first stage turbine rotor blades is at one critical site which significantly affects turbine efficiency. The nozzle including its inner band is a stationary or stator component immediately followed downstream by the rotating turbine blades and their corresponding rotating platforms which form the radially inner flowpath boundary for the hot combustion gases being channeled through the first stage turbine.

The combustion gases discharged from the turbine nozzle must necessarily flow over the axial gap and rotary seal therebetween to reach the turbine blades. The rotary seal cooperates with the internal pressurized purge air being channeled through the axial gap to prevent backflow of the hot combustion gases into the purge cooling circuit.

Accordingly, the smooth flow of the hot combustion gases is interrupted at the inner band-platform axial gap, and the purge air mixes with the combustion gases at this site and further degrades smooth flow.

Flow separation of the combustion gases occurs at this rotary seal and the combustion gases mix with the different velocity purge air for collectively further reducing efficiency.

Efficiency losses at this location decrease the total pressure of the combustion gases available at the turbine blades, which in turn corresponding reduces turbine efficiency. And, the disrupted flow at the beginning of the blade platforms can lead to increased heating thereof.

Accordingly, it is desired to provide a turbine stage having an improved rotary seal between the stator nozzle and rotor blades for improving turbine efficiency.

The present invention: is defined in the accompanying claims.

US 6 572 335, as well as US 5252026, US 5181728, GB 2032531 and GB 2427004 are prior art documents disclosing the preamble of claim 1.

The invention, in accordance with preferred and exemplary embodiments, together with further objects and advantages thereof, is more particularly described in the following detailed description taken in conjunction with the accompanying drawings in which:
Figure 1 is a partly sectional, axial schematic view of a turbofan gas turbine engine.
Figure 2 is an enlarged, axial sectional view of the high pressure turbine illustrated in Figure 1.
Figure 3 is a further enlarged, axial sectional view of the rotary seal between the stator nozzle and rotor blades shown in Figure 3.

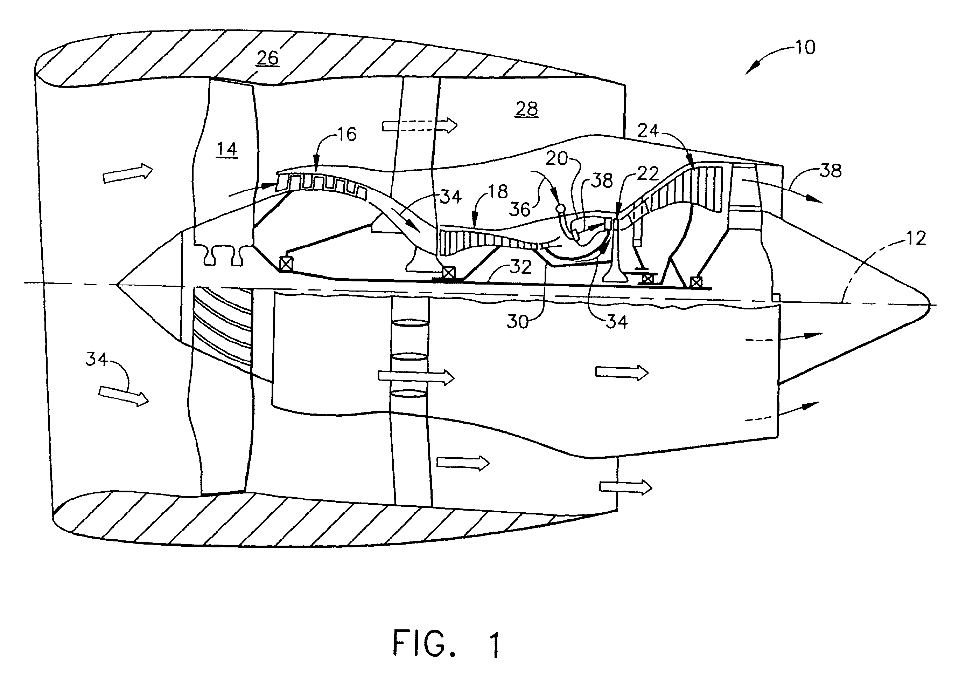

Illustrated schematically in Figure 1 is an exemplary turbofan aircraft gas turbine engine 10. The engine is axisymmetrical about a longitudinal or axial centerline axis 12 and is suitably mounted to the wing or a fuselage of an aircraft (not shown) for powering an aircraft in flight in an exemplary application.

The engine includes in serial flow communication a fan 14, a low pressure or booster compressor 16, a high pressure (HP) compressor 18, an annular combustor 20, a high pressure turbine (HPT) 22, and a low pressure turbine (LPT) 24.

An annular nacelle 26 surrounds the fan 14 and defines an annular bypass duct 28 extending aft around the booster compressor 16. A first drive shaft 30 joins the HPT 22 to the HP compressor 18, and a second drive shaft 32 joins the LPT 24 to the fan 14 and booster compressor 16. The two drive shafts are suitably mounted in bearings in corresponding frames within the engine in a conventional configuration of the various engine components described above.

During operation, ambient air 34 enters the inlet of the engine and is pressurized in part by the fan 14 and discharged through the bypass duct 28 for providing a majority of propulsion thrust. Some of the air 34 passing the fan enters the booster compressor 16 and undergoes a further compression cycle in the multiple axial stages thereof, with additional compression also being provided in the HP compressor 18 in the multiple axial stages thereof.

The pressurized air 34 is discharged from the compressor and suitably mixed with fuel 36 in the combustor 20 for generating hot combustion gases 38. Energy is extracted from the combustion gases 38 in the HPT 22 to drive the first shaft 30 and power the HP compressor 18. Additional energy is extracted from the combustion gases in the LPT 24 to drive the second shaft 32 and power the fan 14 and booster compressor 16.

The engine as described above is conventional in configuration and operation and includes multiple compression stages and multiple turbine stages. For example, the booster compressor 16 may have four axial stages including four rows of compressor blades alternating axially with four rows of inlet guide vanes.

The high pressure compressor 18 may include seven axial stages for example, having seven rows of compressor blades alternating axially with corresponding rows of inlet guide vanes, and discharging the CDP air 34 through a conventional diffuser.

The HPT 22 is a single stage turbine followed in turn by an exemplary five stage LPT 24.

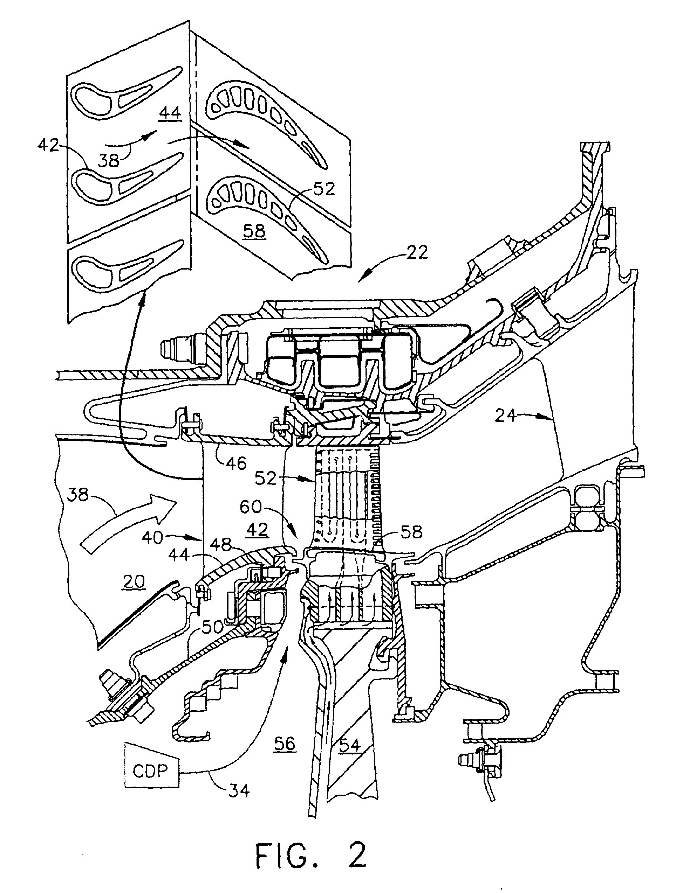

Figure 2 illustrates in more detail the HPT 22 disposed in serial flow communication between the outlet of the combustor 20 and the inlet of the LPT 24.

The HPT 22 includes a first stage or HP turbine nozzle 40 having a row of stator vanes 42 suitably mounted in inner and outer bands 44,46.

Typically, two nozzle vanes 42 are integrally joined together in corresponding arcuate segments of the bands in a nozzle doublet in a unitary configuration. And, a full row of the doublets completes the annular nozzle.

The inner band 44 typically includes a radially inwardly extending mounting flange 48 suitably fixedly attached to a corresponding flange on a conical nozzle support 50, by a row of fastening bolts for example.

Following the vanes is a single row of HP turbine blades 52 removably mounted to the perimeter or rim of a first stage or HP rotor disk 54. The disk 54 is fixedly joined to the first drive shaft 30 which in turn is fixedly joined to the rotor disks supporting the compressor blades of the high pressure compressor 18.

Each nozzle vane 42 has the typical airfoil shape with a generally concave pressure side and a generally convex opposite suction side extending axially in chord between the upstream leading edge and the downstream trailing edge. Correspondingly, the airfoil portion of the first stage turbine blades 52 has the generally concave pressure side and generally convex opposite suction side extending axially between the leading and trailing edges thereof.

The vanes 42 and blades 52 may have any suitable internal cooling configuration. Figure 2 illustrates forward and aft cooling cavities for the vanes. The blades have a pair of three-pass serpentine cooling channels over the midchord region with corresponding inlets through the dovetail. And, the blade leading and trailing edges have dedicated cooling chancels therefor.

In this way, pressurized air is bled from the compressor and channeled through the several internal cooling circuits of the vanes 42 and blade 52 for providing internal cooling thereof in any conventional manner, with the spent air then being discharged through various rows of outlet holes found in the pressure and suction sides of the airfoils from the leading edge to the trailing edge.

Since the turbine nozzle 40 is a stationary component and the turbine blades 52 and supporting disk 54 rotate during operation, an annular forward plenum or cavity 56 is disposed axially therebetween for receiving a portion of the pressurized CDP air 34 for use in cooling and purging this stator-rotor interface or junction.

Each turbine blade airfoil extends radially in span from a radially inner platform 58 to a radially outer tip spaced closely adjacent to a surrounding turbine shroud. The blade platform is integrally joined to a conventional axial-entry mounting dovetail retained in a complementary dovetail slot in the perimeter of the rotor disk 54.

The annular nozzle inner band 44 illustrated in Figure 2 terminates aft in radial position or elevation with the forward end of the row of blade platforms 58 extending circumferentially together in another full annulus. The inner band and blade platforms are therefore axially coextensive at similar radial elevation to provide a substantially continuous inner flowpath or boundary for the hot combustion gases 38 being channeled through the main flowpath between the nozzle vanes and turbine blades.

The blade platforms 58 closely adjoin the inner band 44 at a small axial gap having a rotary seal 60 extending therebetween to control the discharge of the internal purge air 34 from the forward cavity 56 into the main turbine flowpath, and thereby prevent backflow or ingestion of the hot combustion gases radially inwardly into the forward cavity. The purge air has sufficient pressure locally greater than the pressure of the combustion gases to ensure discharge or outflow of the purge air through the rotary seal 60 and into the main flowpath along the junction of the nozzle inner band and the blade platforms.

As indicated above, this axial gap between the stator nozzle 40 and the rotor blades 52 provides a local interruption in the otherwise smooth inner flowpath for the hot combustion gases. Furthermore, the purge air 34 being discharged from the rotary seal necessarily mixes with the local combustion gases and provides additional aerodynamic losses therewith.

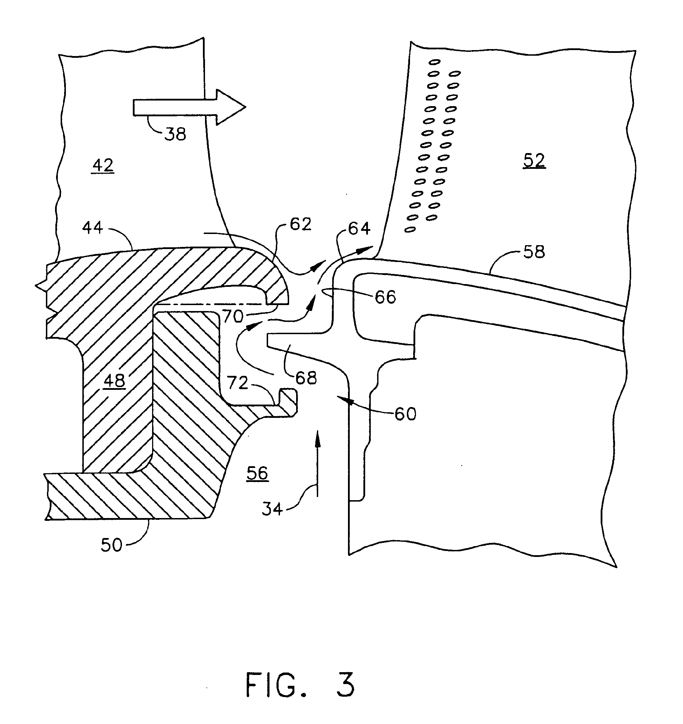

Accordingly, the inner band 44 illustrated in more detail in Figure 3 is modified to include a full radial height stator bullnose 62 at the aft or trailing edge thereof which cooperates with the rotary seal 60 for significantly reducing aerodynamic losses thereat.

Correspondingly, each blade platform 58 includes a rotor bullnose 64 at the leading edge or forward edge thereof which in turn is joined to a flat or blunt forward vertical face 66 extending radially inwardly therefrom.

The stator and rotor bullnoses 62, 64 are convex outwardly in axial profile and are uniform circumferentially around the inner band and blade platforms. Both bullnoses 62, 64 extend radially inwardly and converge together, with the blunt forward face 66 being disposed substantially vertically or radially without inclination in the exemplary embodiment.

The platform forward face 66 extends radially inwardly to integrally join a seal or rotor wing 68 extending axially forwardly therefrom and circumferentially along the full extent of each blade platform. The seal wing 68, commonly referred to as an angel wing, is spaced below the stator bullnose 62 to define the rotary seal 60 therewith, commonly also referred to as a labyrinth seal.

In these rotary seals, the cooperating rotary and stator components do not contact each other but are spaced closely adjacent to each other for imparting a substantial flow restriction against the free flow of pressurized fluid therepast.

Accordingly, as the pressurized purge air 34 flows radially upwardly, its free flow is restrained by the rotary seal 60, which nevertheless permits discharge of the purge air through the axial gap defined between the two bullnoses 62, 64. At this location, the discharged purge air meets and mixes with the combustion gases 38 flowing downstream through the main turbine flowpath.

The introduction of the relatively large stator bullnose 62 delays the onset of flow separation of the combustion gases as they flow downstream over the rotary seal, which permits the resultant flow separation to occur within the recessed space or pocket provided between the stator bullnose 62 and the forward face 66 of the blade platform. In this protected region, the purge air 34 is discharged radially outwardly to meet and mix with the separated combustion gas flow.

Accordingly, the aerodynamic losses due to flow separation of the combustion gases, mixing of the different velocity combustion gases and discharged purge air, and interruption in the smooth continuity of the combustion gases over the rotary seal are reduced for significantly increasing aerodynamic efficiency of the turbine stage.

Computational fluid dynamics (CFD) analysis predicts a substantial improvement in aerodynamic efficiency of the turbine stage employing the cooperating stator bullnose interface of, for example, up to about a fraction of one percent.

As shown in Figure 3, the stator bullnose 62 axially aft overlaps the forward or leading edge portion of the rotor wing 68, and converges radially inwardly toward the blunt face 66. The convex bullnose 62 uses the Coanda effect to draw the local combustion gas boundary flow radially inwardly where it meets the radially outwardly flowing purge air 34.

The stator bullnose 62 defines the aft outer surface of the inner band 44 at its trailing edge, and the inner band further includes a lower surface 70 under the aft bullnose 62 which is disposed generally parallel to and axially overlaps the rotor wing 68 for cooperating therewith. The purge air 34 must turn sharply as it flows around the angel wing 68, and the lower surface 70 of the stator bullnose 62 confines the purge flow aft to meet the diverted combustion gases in the recessed pocket between the inner band and blade platform.

The lower surface 70 of the stator bullnose 62 may be in the form of a local step at the trailing edge of the inner band, or it may extend upstream therefrom without a step as illustrated in phantom line in Figure 3.

The stator bullnose 62 is convex axially and preferably extends radially inwardly past the convex rotor bullnose 64, and terminates above the rotor wing 68 at about mid-elevation in the blunt platform face 66. The stator bullnose 62 is preferably convex from the trailing edges of the nozzle vanes 42 and is fully arcuate and convex in radial elevation to its junction with the lower surface 70 of the inner band.

In this way, the stator bullnose 62 is completely arcuate and convex for the entire trailing edge of the inner band 44 aft from the vane trailing edges, over at least a majority of the thickness of the inner band at the trailing edge, and preferably over the full radial thickness or extent thereof. The convex bullnose 62 thusly provides a radially continuous and uninterrupted smooth aerodynamic surface along which the combustion gases may closely adhere with a smooth boundary layer to delay as long as possible flow separation therefrom.

Discontinuity along the trailing edge region of the inner band should be minimized or avoided to prevent the undesirable early separation of the combustion gas flow in the aft direction over the rotary seal.

The inner band 44 and blade platform 58 illustrated in Figure 3 are preferably aligned axially and coextensive in radial elevation at the rotary seal 60 for providing an aerodynamically smooth inner boundary for the combustion gases. And, the inner band and platform converge radially inwardly between the stator bullnose 62 and the radial blunt face 66.

In this way, the small pocket formed therebetween is recessed in common height from the inner boundary of combustion flowpath for permitting premixing of the purge air with the separated combustion gases in the pocket, and thereby reduce aerodynamic losses associated therewith.

As indicated above, the stator bullnose 62 preferably commences at the trailing edges of the nozzle vanes 42 and extends aft toward the rotor bullnose 64 at the forward end of the blade platform 58.

In contrast, the rotor bullnose 64 commences forward from or spaced forward from the leading edge of the blade 52, and then terminates radially inwardly in radial alignment with the blunt face 66 before termination of the stator bullnose 62, which terminates at the mid-elevation of the blunt face 66. In this way, the combustion gases are drawn radially inwardly toward the middle of the outlet pocket above the rotor wing 68 where they meet and mix with the discharging purge air.

The configuration of the turbine blades 52 and their platforms 58 are conventional in the exemplary embodiment illustrated in Figure 3, including a relatively small rotor bullnose 64 providing a sharp corner transition between the axial platform 58 and the radial blunt face 66.

Correspondingly, the stator bullnose 62 is specifically configured for improved aerodynamic performance therewith, and includes a larger radius of curvature than for the rotor bullnose 64.

Since the flow fields of the discharging purge air 34 and the combustion gases 38 in the main flowpath are quite complex through and around the rotary seal 60, the precise configuration of convex stator bullnose 62 must complement the configuration of the forward region of the blade platform 58 to minimize aerodynamic losses for increasing turbine efficiency.

For example, the typical profile of the trailing edge of a nozzle inner band is relatively square, with significant, blunt aft faces. The blunt aft face of the inner band promotes flow separation, and a corresponding decrease in turbine efficiency.

In contrast, the fully convex stator bullnose 62 eliminates any blunt or straight aft face at which flow separation would be prevalent.

In the exemplary embodiment illustrated in Figure 3, the rotary seal 60 also includes a stator angel wing 72 disposed radially below the rotor wing 68, and extending axially aft to partially overlap that wing and increase turning in the serpentine flowpath defined by the rotary seal for further restraining free flow of the discharged purge air.

In this way, the purge air is directed radially outwardly from the forward cavity 56, and then follows the circuitous flowpath around the rotor wing 68. The stator wing 72 first causes the purge air to flow axially forward and then radially outwardly and axially aft in reverse direction over the top of the rotor wing 68.

Here the purge air joins the combustion gases drawn radially inwardly by the Coanda effect of the convex stator bullnose 62 for delaying flow separation of the combustion gases and allowing premixing thereof with the purge air being discharged from the rotary seal.

The bullnose rotary seal 60 effected in Figure 3 improves flow attachment of the combustion gases as they are discharged from the nozzle inner band 44, reduces flow separation thereof, and further reduces mixing losses with the different velocity purge air being discharged from the forward purge cavity 56.

In this interface region between the discharged purge air and diverted combustion gases, the intermixed flow is subject to smaller circulation and less mixing, and permits the cooler purge air to thermally protect the forward portion of the blade platform 58, including the rotor bullnose 64.

This configuration not only increases the total pressure of the combustion gases at the leading edges of the turbine blades 52 for increasing turbine efficiency, but also reduces the temperature of the blade platform along its leading edge. A cooler operating platform reduces thermal stresses therein and may increase the life thereof, or may be used for reducing any cooling air specifically provided for internally cooling the blade platform itself.

While there have been described herein what are considered to be preferred and exemplary embodiments of the present invention, other modifications of the invention shall be apparent to those skilled in the art from the teachings herein, and it is, therefore, desired to be secured in the appended claims all such modifications as fall within the scope of the invention.

## Claims

1. A turbine stage (22) comprising:
an annular stator nozzle (40) including a row of vanes (42) mounted between inner and outer bands (44,46), and said inner band (44) includes a radially inwardly extending mounting flange (48);
a row of blades (52) mounted to the perimeter of a rotor disk (54) and spaced aft from said mounting flange (48) to define a forward cavity (56) for channeling purge air (34) therethrough;
each blade (52) including an inner platform (58) adjoining said inner band (44) at a rotary seal (60) therewith disposed atop said forward cavity (56) for discharging said purge air; and
said inner band (44) terminating at a trailing edge thereof **characterized in that** said inner band (44) includes a full radial height stator bullnose (62) extending radially inwardly from said vanes to said trailing edge for reducing aerodynamic losses at said rotary seal (60).

2. A stage according to claim 1 wherein said blade platform (58) includes a rotor bullnose (64) joined to a blunt forward face (66) extending radially inwardly therefrom to a rotor wing (68) extending axially forwardly from said blunt face and spaced below said stator bullnose (62) to define said rotary seal (60) therewith.

3. A stage according to claim 2 wherein said stator bullnose (62) axially overlaps said rotor wing (68) and converges inwardly toward said rotor bullnose (64) and said blunt face (66).

4. A stage according to claim 2 or 3 wherein said stator bullnose (62) is convex radially inwardly past said rotor bullnose (64) and terminates above said rotor wing (68) at about mid-elevation of said blunt face (66).

5. A stage according to claim 2, 3 or 4 wherein said inner band (44) and platform (58) are coextensive in elevation at said rotary seal (60), and converge radially inwardly between said stator and rotor bullnoses (62,64).

6. A stage according to any of claims 2 to 5 wherein:
said stator bullnose (62) commences at the trailing edges of said vanes (42), and extends aft toward said rotor bullnose (64); and
said rotor bullnose (64) commences forward from a leading edge of said blade (52) and terminates in a radially aligned blunt face (66).

7. A stage according to any of claims 2 to 6 wherein said stator and rotor bullnoses (62,64) are fully convex in radial elevation.

8. A stage according to any of claims 2 to 7 wherein said stator bullnose (62) has a larger radius of curvature than said rotor bullnose (64).

9. A stage according to any preceding claim wherein said rotary seal (60) further comprises a stator wing (72) extending aft from said mounting flange (48) below said rotor wing (68).

10. A stage according to any preceding claim wherein said inner band (44) further includes a lower surface (70) under said stator bullnose (62) disposed generally parallel to and axially overlapping said rotor wing (68).

## Patentansprüche

1. Turbinenstufe (22), aufweisend:
einen ringförmigen Statorleitapparat (40) mit einer Reihe zwischen Innen- und Außenbändern (44, 46) montierter Leitschaufeln (42), und wobei das Innenband (44) einen sich radial nach innen erstreckenden Befestigungsflansch (48) enthält;
eine Reihe von Laufschaufeln (52), die auf dem Umfang einer Rotorscheibe (54) montiert und in Abstand hinter dem Befestigungsflansch (48) angeordnet sind, um einen vorderen Hohlraum (56) zum Leiten von Spülluft (34) durch diesen zu definieren;
wobei jede Laufschaufel (52) eine Innenplattform (58) angrenzend an das Innenband (44) bei einer Rotationsdichtung (60) damit enthält, die über dem vorderen Hohlraum (56) zur Ausgabe der Spülluft angeordnet ist; und
wobei das Innenband (44) an seiner Hinterkante endet, **dadurch gekennzeichnet, dass** das Innenband (44) eine Statorabrundung (62) in voller radialer Höhe enthält, die sich radial von den Leitschaufeln zu der Hinterkante erstreckt, um aerodynamische Verluste an der Rotationsdichtung (60) zu reduzieren.

2. Stufe nach Anspruch 1, wobei die Laufschaufelplattform (58) eine Rotorabrundung (64) enthält, die mit einer stumpfen vorderen Fläche (66) verbunden ist, die sich davon radial nach innen zu einem Rotorflügel (68) erstreckt, der sich von der stumpfen Fläche axial nach vorne erstreckt und unter der Statorabrundung (62) in Abstand angeordnet ist, um die Rotationsdichtung (60) damit zu definieren.

3. Stufe nach Anspruch 2, wobei die Statorabrundung (62) den Rotorflügel (68) axial überlappt und zu der Rotorabrundung (64) und der stumpfen Fläche (66) nach innen konvergiert.

4. Stufe nach Anspruch 2 oder 3, wobei die Statorabrundung (62) an der Rotorabrundung vorbei (64) konvex radial einwärts gerichtet ist und über dem Rotorflügel (68) etwa in mittiger Höhe der stumpfen Fläche (66) endet.

5. Stufe nach Anspruch 2, 3 oder 4, wobei das Innenband (44) und die Plattform (58) in der Höhe an der Rotordichtung (60) in gleicher Höhe sind und radial nach innen zwischen den Stator- und Rotorabrundungen (62, 64) konvergieren.

6. Stufe nach einem der Ansprüche 2 bis 5, wobei:
die Statorabrundung (62) an den Hinterkanten der Leitschaufeln (42) beginnt und sich nach hinten zu der Rotorabrundung (64) erstreckt; und
wobei die Rotorabrundung (64) vor einer Vorderkante der Laufschaufel (52) beginnt und in einer radial ausgerichteten stumpfen Fläche (66) endet.

7. Stufe nach einem der Ansprüche 2 bis 6, wobei die Stator- und Rotorabrundungen (62, 64) im radialen Aufriss vollständig konvex sind.

8. Stufe nach einem der Ansprüche 2 bis 7, wobei die Statorabrundung (62) einen größeren Krümmungsradius als die Rotorabrundung (64) hat.

9. Stufe nach einem der vorstehenden Ansprüche, wobei die Rotationsdichtung (60) ferner einen Statorflügel (72) aufweist, der sich von dem Befestigungsflansch (48) nach hinten unter den Rotorflügel (68) erstreckt.

10. Stufe nach einem der vorstehenden Ansprüche, wobei das Innenband (44) ferner eine untere Oberfläche (70) unter der Statorabrundung (62) enthält, die im Wesentlichen parallel zu und axial den Rotorflügel (68) überlappend angeordnet ist.

## Revendications

1. Etage de turbine (22) comprenant :
un distributeur de stator annulaire (40) comprenant une rangée d'aubes (42) montées entre des bandes intérieure et extérieure (44, 46), et ladite bande intérieure (44) comprend une bride de montage s'étendant radialement vers l'intérieur (48) ;
une rangée d'ailettes (52) montées sur le périmètre d'un disque de rotor (54) et espacées vers l'avant depuis ladite bride de montage (48) pour définir une cavité avant (56) afin de canaliser un air de purge (34) au travers ;
chaque ailette (52) comprenant une plateforme intérieure (58) adjacente à ladite bande intérieure (44) au niveau d'un joint tournant (60) disposé en haut de ladite cavité avant (56) pour évacuer ledit air de purge ; et
ladite bande intérieure (44) se terminant au niveau d'un bord arrière de celle-ci, **caractérisé en ce que** ladite bande intérieure (44) comprend un bord arrondi de stator de pleine hauteur radiale (62) s'étendant radialement vers l'intérieur depuis lesdites aubes jusqu'audit bord arrière pour réduire les pertes aérodynamiques au niveau dudit joint tournant (60).

2. Etage selon la revendication 1, dans lequel ladite plateforme d'ailette (58) comprend un bord arrondi de rotor (64) relié à une face avant émoussée (66) s'étendant radialement vers l'intérieur depuis celui-ci vers une aile de rotor (68) s'étendant axialement vers l'avant depuis ladite face émoussée et espacée sous ledit bord arrondi de stator (62) pour définir conjointement ledit joint tournant (60).

3. Etage selon la revendication 2, dans lequel ledit bord arrondi de stator (62) chevauche axialement ladite aile de rotor (68) et converge vers l'intérieur vers ledit bord arrondi de rotor (64) et ladite face émoussée (66).

4. Etage selon la revendication 2 ou 3, dans lequel ledit bord arrondi de stator (62) est convexe radialement vers l'intérieur au-delà dudit bord arrondi de rotor (64) et se termine au-dessus de ladite aile de rotor (68) à peu près à mi-hauteur de ladite face émoussée (66).

5. Etage selon la revendication 2, 3 ou 4, dans lequel ladite bande intérieure (44) et ladite plateforme (58) s'étendent à la même hauteur au niveau dudit joint tournant (60), et convergent radialement vers l'intérieur entre lesdits bords arrondis de stator et de rotor (62, 64).

6. Etage selon l'une quelconque des revendications 2 à 5, dans lequel :
ledit bord arrondi de stator (62) commence au niveau du bord arrière desdites aubes (42), et s'étend vers l'avant en direction dudit bord arrondi de rotor (64) ; et
ledit bord arrondi de rotor (64) commence en avant depuis un bord avant de ladite ailette (52) et se termine dans une face émoussée alignée radialement (66).

7. Etage selon l'une quelconque des revendications 2 à 6, dans lequel lesdits bords arrondis de stator et de rotor (62, 64) sont parfaitement convexes en élévation radiale.

8. Etage selon l'une quelconque des revendications 2 à 7, dans lequel ledit bord arrondi de stator (62) a un rayon de courbure supérieur à celui dudit bord arrondi de rotor (64).

9. Etage selon l'une quelconque des précédentes revendications, dans lequel ledit joint tournant (60) comprend en outre une aile de stator (72) s'étendant vers l'avant depuis ladite bride de montage (48) sous ladite aile de rotor (68).

10. Etage selon l'une quelconque des précédentes revendications, dans lequel ladite bande intérieure (44) comprend en outre une surface inférieure (70) sous ledit bord arrondi de stator (62) disposée de façon généralement parallèle à ladite aile de rotor (68) et la chevauchant axialement.
